(19) Europäisches Patentamt / European Patent Office / Office européen des brevets

(11) **EP 2 029 410 B1**

(12) **FASCICULE DE BREVET EUROPEEN**

(45) Date de publication et mention
de la délivrance du brevet:
**12.05.2010 Bulletin 2010/19**

(51) Int Cl.:
***B60W 10/10*** *(2006.01)*

(21) Numéro de dépôt: **07766040.5**

(86) Numéro de dépôt international:
**PCT/FR2007/051264**

(22) Date de dépôt: **14.05.2007**

(87) Numéro de publication internationale:
**WO 2007/141438 (13.12.2007 Gazette 2007/50)**

(54) **PROCEDE ET SYSTEME D'ENGAGEMENT D'UN NOUVEAU RAPPORT DE VITESSES, SUPPORT D'ENREGISTREMENT POUR CE PROCEDE**

EINLEGEVERFAHREN UND -SYSTEM FÜR EIN NEUES GESCHWINDIGKEITSVERHÄLTNIS, AUFZEICHNUNGSMEDIUM FÜR DIESES VERFAHREN

METHOD AND ENGAGEMENT SYSTEM FOR A NEW SPEED RATIO, RECORDING MEDIUM FOR THIS METHOD

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.06.2006 FR 0605092**

(43) Date de publication de la demande:
**04.03.2009 Bulletin 2009/10**

(73) Titulaire: **Peugeot Citroën Automobiles SA
78140 Vélizy-Villacoublay (FR)**

(72) Inventeurs:
• **ROCQ, Gaëtan
F-78125 La Boissiere Ecole (FR)**
• **LAUNAY, Cédric
F-78680 Epone (FR)**
• **GALINAUD, Florian
F-75013 Paris (FR)**

(56) Documents cités:
**EP-A2- 1 122 109     FR-A1- 2 822 109
US-A- 5 560 249**

**Description**

La présente invention concerne un procédé et un système d'engagement d'un rapport de vitesses, et un support d'enregistrement pour ce procédé.

De tels procédés sont utiles lors de l'engagement d'un nouveau rapport de vitesses entre un arbre primaire et un arbre secondaire d'une boîte de vitesses pilotée d'un véhicule automobile hybride. Les véhicules automobiles hybrides sont équipés d'un moteur thermique et d'une machine électrique tournante propre chacun à entraîner, en alternance ou simultanément, l'arbre primaire de la boîte de vitesses. Généralement, la machine électrique est équipée à cet effet d'un rotor fixé en permanence à l'arbre primaire. Par ailleurs, classiquement, les boîtes de vitesses comportent au moins un synchroniseur mécanique commandable propre à transmettre par frottement une quantité réglable de couples de l'arbre secondaire à l'arbre primaire et vice versa.

Dans ce contexte, les procédés existants d'engagement d'un nouveau rapport de vitesses comprennent :

- une phase de désengagement du rapport de vitesses actuellement engagé pendant laquelle la boîte de vitesses désaccouple mécaniquement l'arbre primaire et l'arbre secondaire, puis
- une phase de synchronisation des vitesses angulaires des arbres primaire et secondaire, cette phase comportant :

  a) une étape d'action de la machine électrique pour faire converger la vitesse angulaire $\omega_1$ de l'arbre primaire vers la vitesse angulaire $\omega_2$ de l'arbre secondaire multipliée par la démultiplication de boîte $dn_f$ du nouveau rapport $n_f$ de vitesses à engager, et
  b) une étape d'action du synchroniseur mécanique pour faire converger la vitesse angulaire $\omega_1$ vers la vitesse angulaire $\omega_2$ multipliée par la démultiplication de boîte $dn_f$ du nouveau rapport $n_f$,

- une phase d'engagement du nouveau rapport de vitesses dès que la condition d'arrêt suivante est satisfaite : $S_0 < \omega_1 - \omega_2 \cdot dn_f < S_1$, où $S_0$ et $S_1$ sont des seuils prédéterminés.

Dans les procédés existants, les étapes a) et b) sont exécutées l'une après l'autre.

On définit ici le temps de creux comme étant le temps nécessaire pour exécuter la phase de désengagement, la phase de synchronisation et la phase d'engagement.

Dans les véhicules hybrides, le rotor de la machine électrique augmente fortement l'inertie de l'arbre primaire. Dès lors, le temps nécessaire pour faire converger la vitesse angulaire $\omega_1$ de l'arbre primaire vers la vitesse angulaire de l'arbre secondaire $\omega_2$ multipliée par la démultiplication de boîte $dn_f$ du nouveau rapport de vitesses $n_f$ est nettement supérieur à celui que l'on peut observer pour un véhicule automobile sans rotor fixé à l'arbre primaire. Un tel dispositif est montré par le document EP 11 22 09 qui indique l'état correspondant de la technique.

Il est donc souhaitable de diminuer ce temps de creux pour les véhicules automobiles hybrides.

L'invention vise à satisfaire ce souhait en proposant un procédé permettant de diminuer le temps de creux pour un véhicule automobile hybride.

L'invention a donc pour objet un tel procédé dans lequel les étapes a) et b) sont au moins en partie exécutées simultanément, et dans lequel après le déclenchement de l'étape b), le procédé comporte une opération de réglage de la quantité de couple transmis par le synchroniseur mécanique de l'arbre secondaire vers l'arbre primaire ou vice versa en fonction d'un seuil maximal d'énergie dissipable par le synchroniseur mécanique.

Dans le procédé ci-dessus, la durée de la phase de synchronisation est raccourcie car la machine électrique et le synchronisateur mécanique agissent simultanément pour faire converger la vitesse angulaire $\omega_1$ vers la vitesse angulaire $\omega_2.dn_f$. De plus, régler la quantité de couple transmis par le synchroniseur rend possible la protection du synchroniseur mécanique.

Les modes de réalisation de ce procédé peuvent comporter une ou plusieurs des caractéristiques suivantes :

- l'opération de réglage est adaptée pour maintenir en permanence la quantité d'énergie dissipée par le synchroniseur mécanique en dessous de ce seuil maximal ;
- les étapes a) et b) sont arrêtées indépendamment dès que la condition d'arrêt est satisfaite ;

Les modes de réalisation de ce procédé présentent en outre les avantages suivants :

- maintenir la quantité d'énergie dissipée par le synchroniseur inférieure à un seuil maximal permet d'empêcher ou de ralentir la détérioration du synchroniseur,
- utiliser simultanément les étapes a) et b) réduit le temps de creux.

L'invention a également pour objet un support d'enregistrement d'informations comportant des instructions pour l'exécution du procédé ci-dessus d'engagement d'un nouveau rapport de vitesses, lorsque ces instructions sont exécutées par un calculateur électronique.

L'invention a également pour objet un système d'engagement d'un nouveau rapport de vitesses entre des arbres primaire et secondaire d'une boîte de vitesses d'un véhicule automobile hybride, ce système comportant :

- la boîte de vitesses mécaniquement accouplée entre les arbres primaire et secondaire, cette boîte comportant au moins un synchroniseur mécanique commandable propre à être déplacé entre une position active dans laquelle il transmet par frottements du couple de l'arbre secondaire à l'arbre primaire et vice versa, et une position de repos dans laquelle il ne permet pas de transmettre du couple de l'arbre secondaire vers l'arbre primaire et vice versa,
- une machine électrique commandable propre à entraîner en rotation, en alternance ou simultanément avec un moteur thermique, l'arbre primaire de la boîte de vitesses, cette machine électrique étant équipée d'un rotor fixé en permanence à l'arbre primaire,
- un superviseur apte à commander la machine électrique et la boîte de vitesses pilotée.

Le superviseur est apte à exécuter le procédé ci-dessus d'engagement d'un nouveau rapport de vitesses.

L'invention sera mieux comprise à la lecture de la description qui va suivre, donnée uniquement à titre d'exemple non limitatif et faite en se référant aux dessins sur lesquels :

- la figure 1 est une illustration schématique d'un véhicule automobile hybride équipé d'un système d'engagement d'un nouveau rapport de vitesses,
- la figure 2 est une illustration schématique d'une boîte de vitesses manuelle du véhicule de la figure 1,
- la figure 3 est un organigramme d'un procédé d'engagement d'un nouveau rapport de vitesses à l'aide du système de la figure 1, et
- la figure 4 est un chronogramme illustrant l'enchaînement dans le temps de différentes phases du procédé de la figure 3.

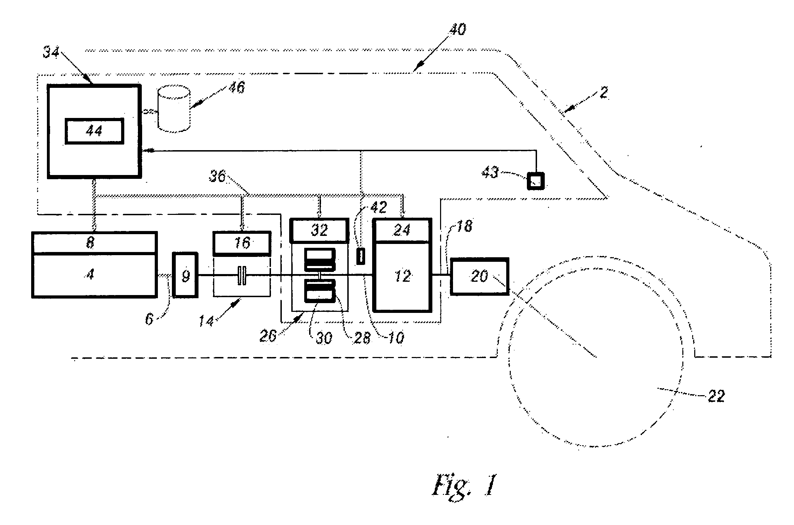

La figure 1 représente un véhicule automobile hybride 2. Dans la suite de cette description, les caractéristiques et fonctions bien connues de l'homme du métier ne sont pas décrites en détail.

Le véhicule 2 est équipé d'un moteur commandable 4 apte à entraîner en rotation un arbre 6 connu sous le terme « d'arbre moteur ». Un contrôleur 8 est connecté au moteur 4 de manière à commander le couple $\Gamma_{am}$ produit par le moteur 4 sur l'arbre 6 pour que ce dernier se rapproche d'une consigne $\Gamma_{cns-am}$ de couple pour l'arbre moteur.

Un volant d'inertie 9 est fixé à l'arbre 6.

L'arbre 6 est mécaniquement apte à être accouplé à un arbre primaire 10 d'une boîte de vitesses manuelle pilotée 12 par l'intermédiaire d'un mécanisme commandable 14 d'accouplement et de désaccouplement mécanique des arbres 6 et 10. Plus précisément, le mécanisme 14 est déplaçable entre une position complètement débrayée dans laquelle aucun couple de l'arbre 6 n'est transmis à l'arbre 10, et une position embrayée dans laquelle la totalité du couple de l'arbre 6 est transmise à l'arbre 10. Typiquement, le mécanisme 14 peut prendre des positions intermédiaires dans lesquelles seule une partie du couple de l'arbre 6 est transmise à l'arbre 10.

Le mécanisme 14 est, par exemple, un embrayage sec ou humide. Le mécanisme 14 est commandé par un contrôleur rapproché 16 apte à ajuster la position du mécanisme 14 en fonction d'une consigne $\Gamma_{cns-emb}$ de couple à transmettre par l'intermédiaire de ce mécanisme.

La boîte de vitesses 12 est mécaniquement accouplée entre l'arbre 10 et un arbre secondaire 18. La boîte 12 est apte à faire tourner l'arbre 18 avec une vitesse angulaire $\omega_2$ égale à la vitesse angulaire $\omega_1$ de l'arbre 10 divisée par un rapport $\underline{dn}_f$. Le rapport $\underline{dn}_f$ peut typiquement prendre un nombre prédéterminé de valeurs strictement supérieures à 1. On suppose ici que la boîte 12 est une boîte à cinq rapports de vitesses $n_1$, $n_2$, $n_3$, $n_4$ et $n_5$, ce qui correspond respectivement à cinq valeurs $dn_1$, $dn_2$, $dn_3$, $dn_4$ et $n_5$ possibles pour le rapport $\underline{dn}_f$. Le rapport de démultiplication est, par exemple, obtenu en calculant le rapport du nombre de dents du pignon fou sur le nombre de dents du pignon fixé.

L'arbre 18 entraîne en rotation les roues motrices du véhicule 2 par l'intermédiaire d'un mécanisme 20 de transmission du couple aux roues motrices.

Pour simplifier la figure 1, seule une roue motrice 22 a été représentée.

La boîte 12 est pilotée par un calculateur rapproché 24 apte, en réponse à une commande de changement de rapport de vitesses, à commander différents actionneurs à l'intérieur de la boîte 12 de manière à changer le rapport $\underline{dn}_f$.

Le véhicule est également apte à entraîner en rotation les roues motrices à l'aide d'une machine électrique tournante 26. A cet effet, cette machine 26 comprend un rotor 28 et un stator 30. Le rotor 28 est fixé sans aucun degré de liberté en rotation à l'arbre 10. Le stator 30 est fixé au châssis du véhicule 2.

La machine 26 est commandée par un calculateur rapproché 32 apte à commander le couple $\Gamma_{ce}$ exercé par la machine 26 sur l'arbre 10 en réponse à une consigne de couple $\Gamma_{cns-ce}$.

L'ensemble des calculateurs rapprochés 8, 16, 24 et 32 sont raccordés à un superviseur commun 34 propre à transmettre les consignes ou les commandes à chacun des contrôleurs rapprochés par l'intermédiaire d'un bus 36 de transmission d'informations. Le bus 36 est, par exemple, un bus CAN (Controler Area Network).

Le véhicule 2 est équipé d'un système 40 d'engagement d'un nouveau rapport de vitesses $n_f$. Ce système 40 comprend :

- la boîte 12 et son contrôleur rapproché 24,
- la machine 26 et son contrôleur rapproché 32,
- un capteur 42 de la vitesse angulaire $\omega_1$,
- un capteur 43 de la vitesse angulaire $\omega_{roue}$ de la roue 22, et
- le superviseur 34.

A cet effet, le superviseur 34 est équipé d'un module 44 de commande de l'engagement du nouveau rapport $n_f$.

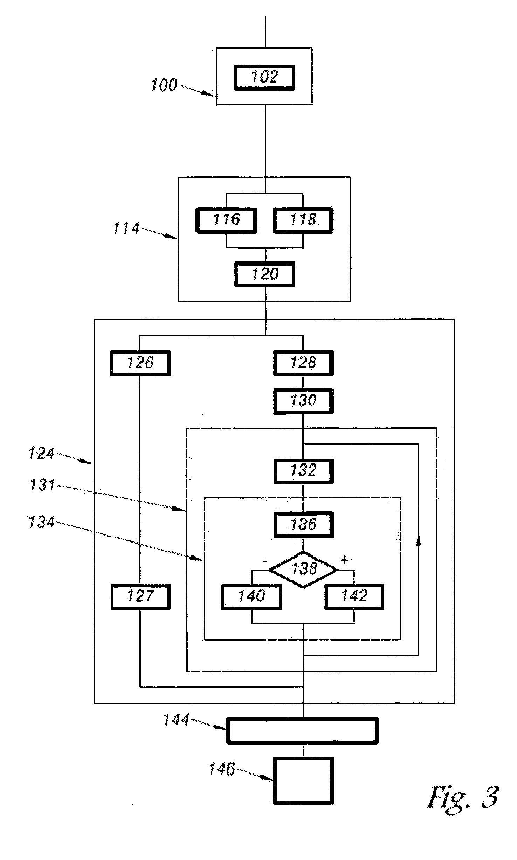

Le superviseur 34 et en particulier le module 44 est typiquement réalisé à partir de calculateurs électroniques programmables aptes à exécuter des instructions enregistrées sur un support d'enregistrement d'informations. A cet effet, le superviseur 34 est connecté à une mémoire 46 contenant des instructions pour l'exécution du procédé de la figure 3 lorsque ces instructions sont exécutées par le calculateur électronique.

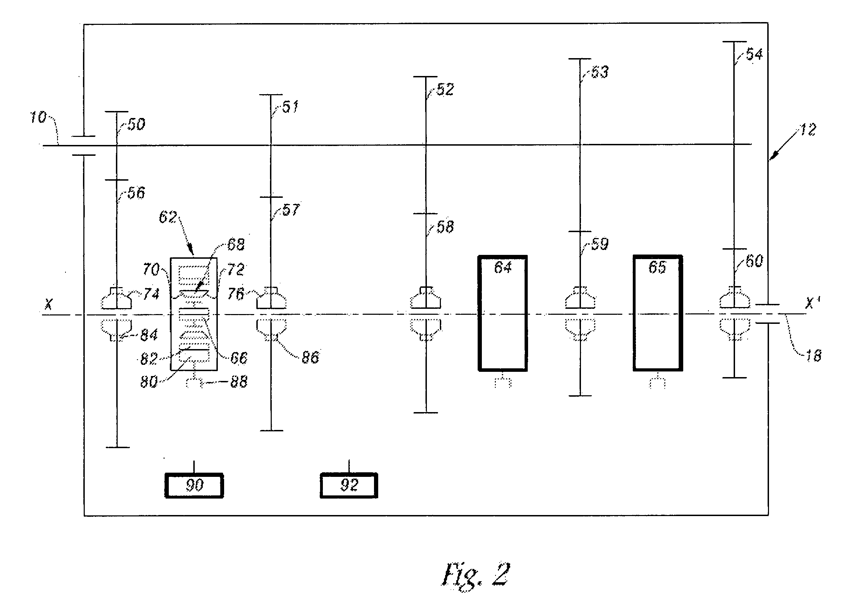

La figure 2 représente schématiquement l'intérieur de la boîte de vitesses 12. Sur cette figure, les éléments déjà décrits en regard de la figure 1 portent les mêmes références numériques.

La boîte 12 comprend :

- cinq pignons 50 à 54 fixés sans aucun degré de liberté en rotation à l'arbre 10, et
- cinq pignons fous 56 à 60 montés libres en rotation autour de l'arbre 18.

Les pignons 50 à 54 sont engagés en permanence avec, respectivement, les pignons 56 à 60 de manière à entraîner simultanément en rotation tous les pignons fous. Par exemple, les couples de pignons 50 et 56, 51 et 57, 52 et 58, 53 et 59, 54 et 60 correspondent respectivement aux rapports de vitesses $n_1$, $n_2$, $n_3$, $n_4$ et $n_5$.

La boîte 12 comprend également trois synchroniseurs mécaniques 62, 64 et 65 montés sur l'arbre 18. Chacun de ces synchroniseurs est, d'une part, apte à synchroniser la vitesse angulaire de l'arbre 18 avec celle du pignon fou à engager et, d'autre part, à engager le pignon fou sélectionné de manière à le rendre solidaire en rotation de l'arbre 18. Les synchroniseurs 62, 64 et 65 sont, par exemple, identiques les uns aux autres et seul le synchroniseur 62 sera décrit plus en détails.

Des boîtes de vitesses équipées de synchroniseurs mécaniques sont bien connues (voir, par exemple, US 5 722 291 ou EP 1 298 340) de sorte que seule une représentation très schématique du synchroniseur 62 permettant d'expliquer un exemple de fonctionnement d'un tel synchroniseur sera présentée ici.

Le synchroniseur 62 est équipé d'un moyeu 66 fixé en permanence à l'arbre 18. Ce moyeu 66 entraîne en rotation une bague de synchronisation 68. Cette bague 68 comprend deux portées coniques 70 et 72 de friction en regard respectivement de portées coniques complémentaires 74 et 76. Les portées coniques 74 et 76 sont respectivement solidaires des pignons 56 et 57.

La bague 68 est déplaçable axialement le long de l'axe X-X' de rotation de l'arbre 18 entre :

- une première position active dans laquelle la portée 70 est en contact avec la portée 74, ce qui permet sous l'action du frottement entre ces portées d'égaliser la vitesse angulaire du pignon 56 et de l'arbre 18,
- une seconde position active dans laquelle la portée 72 est en contact avec la portée 76, ce qui, sous l'action des frottements entre ces portées, permet d'égaliser la vitesse angulaire du pignon 57 avec celle de l'arbre 18, et
- une position de repos dans laquelle aucune des portées 70 ou 72 est en contact avec l'une des portées 74 ou 76, de sorte que la vitesse angulaire des pignons 56 et 57 est différente de celle de l'arbre 18.

Le synchroniseur 62 est également équipé d'un manchon 80 entraîné en rotation par le moyeu 66. Ce manchon 80 est équipé d'une denture 82 de crabotage femelle destinée à être engagée dans une denture 84 de crabotage mâle solidaire du pignon 56 ou dans une denture 86 de crabotage mâle solidaire du pignon 57.

Le manchon 80 est déplaçable axialement le long de l'axe X-X' entre :

- une première position active dans laquelle la denture 82 est engagée dans la denture 84 afin de solidariser en rotation le pignon 56 avec l'arbre 18,
- une seconde position active dans laquelle la denture 82 est engagée dans la denture 86 afin de solidariser en rotation le pignon 57 avec l'arbre 18,
- une position de repos dans laquelle la denture 82 n'est ni engagée dans la denture 84 ni engagée dans la denture 86 de sorte que les pignons 56 et 57 sont libres en rotation autour de l'arbre 18.

L'engagement de la denture 82 soit dans la denture 84 soit dans la denture 86 ne peut être réalisé qu'une fois que la vitesse angulaire des dentures à engager a été égalisée grâce à la bague 68.

Le manchon 80 est également équipé d'une fourchette 88 permettant de déplacer axialement ce manchon.

La boîte 12 est également équipée d'un actionneur commandable 90 d'engagement propre à déplacer la bague 68 et le manchon 80 entre leurs positions actives et leur position de repos. La boîte 12 est également équipée d'un actionneur de sélection 92 permettant d'accoupler mécaniquement l'actionneur 90 au synchroniseur à piloter.

Pour simplifier la figure 2, les liaisons mécaniques entre les actionneurs 90 et 92 et les synchroniseurs correspondants n'ont pas été représentées.

Ces actionneurs 90 et 92 sont commandés par le contrôleur rapproché 24.

Le fonctionnement du système 40 va maintenant être décrit en regard du procédé de la figure 3 dans le cas particulier où le rapport de vitesses actuellement engagé est le rapport $n_2$ et le nouveau rapport de vitesses à engager est le rapport $n_1$.

Le procédé d'engagement du rapport $n_1$ commence par une phase 100 d'annulation du couple exercé par le moteur 4 et par la machine électrique tournante 26 sur l'arbre primaire 10. A cet effet, lors d'une étape 102, le module 44 commande le moteur 4 et la machine électrique tournante 26 pour annuler le couple $\Gamma_{ap}$ de l'arbre primaire.

Dès que le couple de l'arbre 10 est égal à un couple AP prédéterminé permettant le dégagement du rapport, une phase 114 de désengagement du rapport $n_2$ est exécuté.

Lors de la phase 114, le module 44 envoie, lors d'une étape 116, une commande de désengagement du rapport actuellement engagé au contrôleur rapproché 24. En réponse à cette commande, le contrôleur rapproché commande les actionneurs 90 et 92 pour désengager le rapport $n_2$. En parallèle, le module 44 commande, lors d'une étape 118, la machine 26 pour maintenir le couple AP permettant le dégagement du rapport.

Une fois que le rapport $n_2$ a été désengagé, lors d'une étape 120, le contrôleur 24 indique au module 44 que ce rapport est désengagé.

En réponse, la phase 114 s'achève et une phase 124 de synchronisation de la vitesse angulaire du pignon 56 avec la vitesse angulaire de l'arbre 18 est exécutée.

Pendant toute cette phase 124, lors d'une étape 126, le module 44 commande la machine 26 pour que la vitesse $\omega_1$ se rapproche le plus rapidement possible de la vitesse $dn_1 . \omega_2$ (le symbole « . » représente ici l'opération de multiplication).

En réponse, lors d'une étape 127, la machine 26 agit sur l'arbre 10 pour faire converger la vitesse $\omega_1$ vers la vitesse $dn_1 . \omega_2$.

En parallèle, aux étapes 126 et 127, lors d'une étape 128, le module 44 commande l'actionneur 92 pour que celui-ci sélectionne le synchroniseur qui sera utilisé pour engager le rapport $n_1$.

Une fois le synchroniseur sélectionné, lors d'une étape 130, le module commande l'actionneur 90 pour que celui-ci déplace la bague 68 dans une position où les portées 70 et 74 sont proches sans pour autant être en contact. L'étape 130 permet notamment de rattraper les jeux dans le synchroniseur 62.

Immédiatement après l'étape 130, une étape 131 de synchronisation des vitesses angulaires des arbres 10 et 18 à l'aide du synchroniseur 62 est déclenchée.

Au début de l'étape 131, lors d'une opération 132, la vitesse $\omega_1$ est mesurée.

Après l'opération 132 débute une opération de réglage 134 de la quantité de couple transmis de l'arbre secondaire vers l'arbre primaire par le synchroniseur 62. Plus précisément, au début de l'opération 134, lors d'une sous-opération 136, l'énergie dissipée par le synchroniseur depuis l'instant auquel les portées 70 et 74 ont été mises en contact est estimée. Cette estimation $e_{est}$ est, par exemple, obtenue à partir de la force instantanée exercée par l'actionneur 90 pour maintenir en contact les portées 70 et 74. Ensuite, cette force instantanée est intégrée depuis un instant $t_0$ pour obtenir l'estimation $e_{est}$. L'instant $t_0$ est l'instant où la portée 70 rentre en contact avec la portée 74. La force instantanée exercée par l'actionneur 90 est par exemple estimée à partir des courants d'alimentation de l'actionneur 90 ou mesurée.

L'estimation $e_{est}$ peut également être obtenue en tenant compte de la vitesse angulaire $\omega_1$.

Cette estimation $e_{est}$ est ensuite comparée à un seuil prédéterminé $E_{max}$ lors d'une sous-opération 138. Plus précisément, la quantité d'énergie maximale $E_{max}$ que peut dissiper un synchroniseur lorsque la bague 68 est dans sa position active est une donnée constructeur connue. Si l'estimation $e_{est}$ est inférieure à ce seuil $E_{max}$, alors lors d'une sous-opération 140, l'effort exercé par l'actionneur 90 est maintenu constant ou augmenté. Dans le cas contraire, lors d'une sous-opération 142, l'effort exercé par l'actionneur 90 pour maintenir en contact la portée 70 sur la portée 74 est diminué de manière à décroître l'énergie dissipée par le synchroniseur 62 et la maintenir en dessous du seuil $E_{max}$.

A l'issue des sous-opérations 140 et 142, le procédé retourne à la sous-opération 132 tant que la condition d'arrêt suivante n'est pas satisfaite :

$$S_0 < \omega_1 - n_2 \cdot \omega_2 < S_1 \tag{5}$$

où :

- dn$_f$ est la démultiplication du nouveau rapport de vitesses à engager, et
- S$_0$ et S$_1$ sont des seuils prédéterminés.

S$_0$ et S$_1$ sont des seuils prédéterminés inférieurs ou égaux, en valeur absolue, à 100 tours par minute et de préférence inférieurs ou égaux à 50 par minute.

Ainsi, les étapes 127 et 131 sont exécutées en parallèle tant que la condition d'arrêt (5) n'est pas satisfaite.

Dès que la condition d'arrêt (5) est satisfaite, la phase 124 s'achève et une phase 144 d'engagement débute.

La phase 144 est également connue sous le terme de phase de crabotage. Lors de la phase 144, la denture 82 du manchon 88 est engagée dans la denture 84 solidaire du pignon 56.

A l'issue de la phase 144, une phase 146 de reprise de couple est exécutée. Lors de la phase 146, le moteur 4 et la machine 26 sont commandés de manière à produire un couple, respectivement sur l'arbre 6, et sur l'arbre 10 égal au couple exercé sur ces mêmes arbres avant le déclenchement de la phase 100.

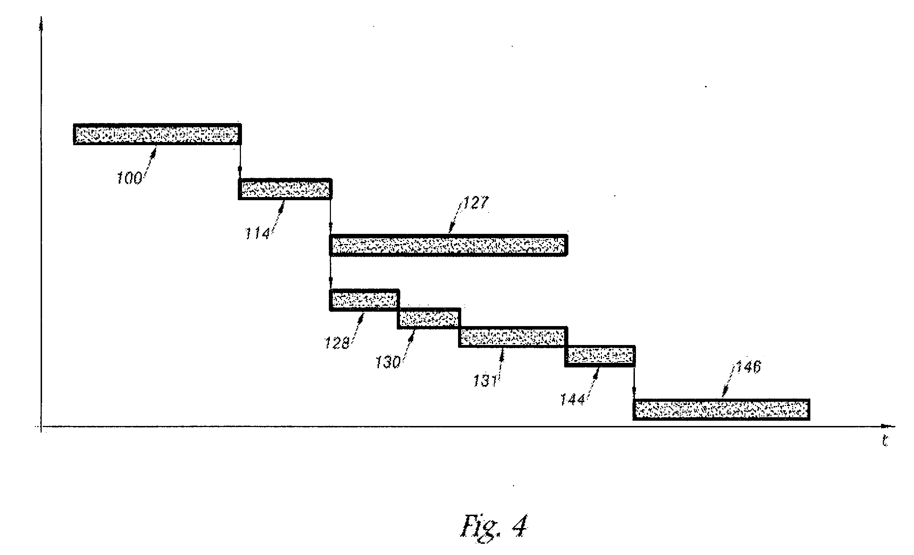

La figure 4 représente, sous la forme d'un chronogramme, la succession des principales phases et étapes du procédé de la figure 3. Sur ce chronogramme, les barres horizontales portent les mêmes références que les étapes correspondantes de la figure 3. On remarquera que l'étape 131 est simultanément exécutée avec l'étape 127, ce qui permet de raccourcir le temps de creux.

De nombreux autres modes de réalisation sont possibles. Par exemple, la phase 146 peut être exécutée en utilisant uniquement, soit la machine électrique, soit le moteur thermique.

Les synchroniseurs ont été décrits ici dans le cas particulier où ceux-ci sont solidaires de l'arbre secondaire. En variante, ces synchroniseurs sont solidaires de l'arbre primaire.

**Revendications**

1. Procédé d'engagement d'un nouveau rapport de vitesses entre un arbre primaire et un arbre secondaire d'une boîte de vitesses pilotée d'un véhicule automobile hybride, le véhicule automobile hybride ayant un moteur thermique et une machine électrique tournante commandable propre chacun à entraîner, en alternance, l'arbre primaire de la boîte de vitesses, la machine électrique étant équipée à cet effet d'un rotor fixé en permanence à l'arbre primaire, et la boîte de vitesses comportant au moins un synchroniseur mécanique commandable propre à être déplacé dans une position active dans laquelle il transmet par frottements du couple de l'arbre secondaire à l'arbre primaire et vice versa et une position de repos dans laquelle il ne transmet pas de couple de l'arbre secondaire vers l'arbre primaire et vice versa,
le procédé comportant :

   - une phase (114) de désengagement du rapport de vitesses actuellement engagé pendant laquelle la boîte de vitesses désaccouple mécaniquement l'arbre primaire et l'arbre secondaire, puis
   - une phase (124) de synchronisation des vitesses angulaires des arbres primaire et secondaire, cette phase comportant :

      a) une étape (127) d'action de la machine électrique pour faire converger la vitesse angulaire $\omega_1$ de l'arbre primaire vers la vitesse angulaire $\omega_2$ de l'arbre secondaire multipliée par la démultiplication de boîte dn$_f$ du nouveau rapport n$_f$ de vitesses à engager, et
      b) une étape (131) d'action du synchroniseur mécanique pour faire converger la vitesse angulaire $\omega_1$ vers la vitesse angulaire $\omega_2$ multipliée par la démultiplication de boîte dn$_f$ du nouveau rapport n$_f$,

   - une phase (144) d'engagement du nouveau rapport de vitesses dès que la condition d'arrêt suivante est satisfaite : $S_0 < \omega_1 - \omega_2 \cdot dn_f < S_1$, où $S_0$ et $S_1$ sont des seuils prédéterminés, **caractérisé en ce que** les étapes a) et b) sont au moins en partie exécutées simultanément, et **en ce que** après le déclenchement de l'étape b), le procédé comporte une opération (134) de réglage de la quantité de couple transmis par le synchroniseur mécanique de l'arbre secondaire vers l'arbre primaire ou vice versa en fonction d'un seuil maximal d'énergie apte à être dissipée par le synchroniseur mécanique.

**2.** Procédé selon la revendication 1, **caractérisé en ce que** l'opération (134) de réglage est adaptée pour maintenir en permanence la quantité d'énergie dissipée par le synchroniseur mécanique en dessous de ce seuil maximal.

**3.** Procédé selon la revendication 2, **caractérisé en ce que** les étapes a) et b) sont simultanément arrêtées dès que la condition d'arrêt est satisfaite

**4.** Support d'enregistrement d'informations, **caractérisé en ce qu'**il comporte des instructions pour l'exécution d'un procédé d'engagement conforme à l'une quelconque des revendications précédentes, lorsque ces instructions sont exécutées par un calculateur électronique.

**5.** Système d'engagement d'un nouveau rapport de vitesses entre des arbres primaire (10) et secondaire (18) d'une boîte (12) de vitesses d'un véhicule automobile hybride (2), ce système comportant :

- la boîte (12) de vitesses mécaniquement accouplée entre les arbres primaire et secondaire, cette boîte comportant au moins un synchroniseur mécanique commandable (62) propre à être déplacé entre une position active dans laquelle il transmet par frottements du couple de l'arbre secondaire à l'arbre primaire et vice versa, et une position de repos dans laquelle il ne permet pas de transmettre du couple de l'arbre secondaire vers l'arbre primaire et vice versa,
- une machine électrique commandable (26) propre à entraîner en rotation, en alternance avec un moteur thermique (4), l'arbre primaire de la boîte de vitesses, cette machine électrique étant équipée d'un rotor (28) fixé en permanence à l'arbre primaire,
- un superviseur (34) apte à commander la machine électrique et la boîte de vitesses pilotée,

**caractérisé en ce que** le superviseur (34) est apte à exécuter un procédé d'engagement d'un nouveau rapport de vitesses conforme à l'une quelconque des revendications 1 à 4.

**Claims**

**1.** Engagement method of a new speed ratio between a primary shaft and a secondary shaft of a controlled gearbox of a hybrid motor vehicle, the hybrid motor vehicle having a thermal motor and a controllable rotating electric machine, each suited to entrain, in alternation, the primary shaft of the gearbox, the electric machine being equipped to this effect with a rotor permanently fixed to the primary shaft, and the gearbox comprising at least one controllable mechanical synchroniser suited to be displaced in an active position in which it transmits by friction torque of the secondary shaft to the primary shaft and vice versa and a position of rest in which it does not transmit torque of the secondary shaft to the primary shaft and vice versa,
the method comprising:

- a disengagement phase (114) of the speed ratio currently engaged during which the gearbox uncouples mechanically the primary shaft and the secondary shaft, then
- a synchronisation phase (124) of the angular speeds of the primary and secondary shafts, this phase comprising:

a) an action step (127) of the electric machine to cause the angular speed $\omega_1$ of the primary shaft to converge towards the angular speed $\omega_2$ of the secondary shaft multiplied by the stepping-down of the gearbox $dn_f$ of the new speed ratio $n_f$ to be engaged, and
b) an action step (131) of the mechanical synchroniser to cause the angular speed $\omega_1$ to converge towards the angular speed $\omega_2$ multiplied by the stepping-down of the gearbox $dn_f$ of the new ratio $n_f$,

- an engagement phase (144) of the new speed ratio as soon as the following stop condition is satisfied: $S_0 < \omega_1 \text{-} \omega_2 \cdot dn_f < S_1$, where $S_0$ and $S_1$ are predetermined thresholds, **characterized in that** the steps a) and b) are at least in part carried out simultaneously, and **in that** after the triggering of step b), the method comprises an operation (134) for regulating the amount of torque transmitted by the mechanical synchroniser of the secondary shaft to the primary shaft or vice versa as a function of a maximum threshold of energy suited to be dissipated by the mechanical synchroniser.

**2.** Method according to Claim 1, **characterized in that** the regulating operation (134) is suited to keep permanently the amount of energy dissipated by the mechanical synchroniser below this maximum threshold.

3. Method according to Claim 2, **characterized in that** the steps a) and b) are simultaneously stopped as soon as the stop condition is satisfied.

4. Data recording medium, **characterized in that** it comprises instructions for the execution of an engagement method according to any one of the preceding claims, when these instructions are executed by an electronic calculator.

5. System for engagement of a new speed ratio between primary (10) and secondary (18) shafts of a gearbox (12) of a hybrid motor vehicle (2), this system comprising:

- the gearbox (12) mechanically coupled between the primary and secondary shafts, this gearbox comprising at least one controllable mechanical synchroniser (62) suited to be displaced between an active position, in which it transmits by friction torque of the secondary shaft to the primary shaft and vice versa, and a position of rest in which it does not allow transmission of torque of the secondary shaft to the primary shaft and vice versa,
- a controllable electric machine (26) suited to entrain in rotation, in alternation with a thermal motor (4), the primary shaft of the gearbox, this electric machine being equipped with a rotor (28) permanently fixed to the primary shaft,
- a supervisor (34) suited to control the electric machine and the controlled gearbox,

**characterized in that**
the supervisor (34) is suited to carry out an engagement process of a new speed ratio in accordance with any one of Claims 1 to 4.

## Patentansprüche

1. Verfahren zum Einrücken eines neuen Gangs zwischen einer Haupt- und einer Nebenwelle eines gesteuerten Schaltgetriebes eines Hybridkraftfahrzeugs, wobei das Hybridkraftfahrzeug einen Verbrennungsmotor und eine steuerbare drehende elektrische Maschine aufweist, die jeweils abwechselnd die Hauptwelle des Schaltgetriebes antreiben können, wobei die elektrische Maschine dazu mit einem Rotor ausgerüstet ist, der ständig auf der Hauptwelle befestigt ist, und wobei das Schaltgetriebe mindestens eine steuerbare Synchronisierungskupplungsnabe aufweist, die in eine aktive Stellung verstellt werden kann, in der sie Moment der Nebenwelle reibungsbedingt auf die Hauptwelle und umgekehrt überträgt, und in eine Ruhestellung, in der sie kein Moment der Nebenwelle zur Hauptwelle und umgekehrt überträgt,
Verfahren, Folgendes aufweisend:

- eine Ausrückphase (114) des gerade eingerückten Gangs, während der das Schaltgetriebe die Haupt- und die Nebenwelle mechanisch abkuppelt, dann
- eine Synchronisationsphase (124) der Winkelgeschwindigkeiten der Haupt- und der Nebenwelle, wobei diese Phase Folgendes aufweist:

a) einen Aktionsschritt (127) der elektrischen Maschine, um die Winkelgeschwindigkeit $\omega_1$ der Hauptwelle zu der Winkelgeschwindigkeit $\omega_2$ der Nebenwelle, multipliziert mit der Getriebeuntersetzung $dn_f$ des neu einzurückenden Gangs $n_f$ konvergieren zu lassen, und
b) einen Aktionsschritt (131) der mechanischen Synchronisierungskupplungsnabe, um die Winkelgeschwindigkeit $\omega_1$ zu der Winkelgeschwindigkeit $\omega_2$ multipliziert mit der Getriebeuntersetzung $dn_f$ des neuen Gangs $n_f$ konvergieren zu lassen,

- eine Einrückphase (144) des neuen Gangs, sobald die folgende Stoppbedingung erfüllt ist: $S_0 < \omega_1 - \omega_2 \cdot dn_f < S_1$, wobei $S_0$ und $S_1$ vorbestimmte Schwellenwerte sind, **dadurch gekennzeichnet, dass** die Schritte a) und b) mindestens teilweise gleichzeitig ausgeführt werden, und dass das Verfahren nach dem Auslösen des Schritts b) einen Vorgang (134) zum Einstellen der Menge an Moment, die von der mechanischen Synchronisierungskupplungsnabe in Abhängigkeit von einem maximalen Energieschwellenwert, der von der mechanischen Synchronisierungskupplungsnabe abgeleitet werden kann, von der Nebenwelle auf die Hauptwelle oder umgekehrt übertragen wird, aufweist.

2. Verfahren nach Anspruch 1, **dadurch gekennzeichnet, dass** der Einstellvorgang (134) die von der mechanischen Synchronisierungskupplungsnabe abgeleitete Energiemenge ständig unter diesem maximalen Schwellenwert halten kann.

**3.** Verfahren nach Anspruch 2, **dadurch gekennzeichnet, dass** die Schritte a) und b) gleichzeitig gestoppt werden, sobald die Stoppbedingung erfüllt ist.

**4.** Datenaufzeichnungsträger, **dadurch gekennzeichnet, dass** er Anweisungen zum Ausführen eines Einrückverfahrens gemäß einem der vorhergehenden Ansprüche enthält, wenn diese Anweisungen von einem elektronischen Rechner ausgeführt werden.

**5.** System zum Einrücken eines neuen Gangs zwischen der Hauptwelle (10) und der Nebenwelle (18) eines Schaltgetriebes (12) eines Hybridkraftfahrzeugs (2), wobei das System Folgendes aufweist:

- das Schaltgetriebe (12), das mechanisch zwischen der Hauptwelle und der Nebenwelle gekuppelt ist, wobei dieses Schaltgetriebe mindestens eine steuerbare mechanische Synchronisierungskupplungsnabe (62) aufweist, die zwischen einer aktiven Stellung, in der sie reibungsbedingt Moment von der Nebenwelle auf die Hauptwelle überträgt und umgekehrt, und einer Ruhestellung verstellt werden kann, in der sie das Übertragen von Moment von der Nebenwelle auf die Hauptwelle und umgekehrt nicht gestattet,
- eine steuerbare elektrische Maschine (26), die abwechselnd mit einem Verbrennungsmotor (4) die Hauptwelle des Schaltgetriebes antreiben kann, wobei diese elektrische Maschine mit einem Rotor (28) ausgerüstet ist, der ständig auf der Hauptwelle befestigt ist,
- einen Supervisor (34), der die elektrische Maschine und das gesteuerte Schaltgetriebe steuern kann,

**dadurch gekennzeichnet, dass** der Supervisor (34) ein Einrückverfahren eines neuen Gangs gemäß einem der Ansprüche 1 bis 4 ausführen kann.

*Fig. 1*

Fig. 2

Fig. 3

*Fig. 4*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 112209 A
- US 5722291 A

- EP 1298340 A